# EUROPEAN PATENT SPECIFICATION

(11) **EP 2 406 598 B1**
(45) Date of publication and mention of the grant of the patent: **30.09.2015**
(21) Application number: 09789507.2
(22) Date of filing: 12.03.2009
(51) Int. Cl.: G01J 1/08, G01J 3/10, G01J 5/52

(54) **LARGE-ANGLE UNIFORM RADIANCE SOURCE**
UNIFORME STRAHLUNGSQUELLE MIT GROSSEM ABSTRAHLWINKEL
SOURCE DE LUMINANCE UNIFORME À GRAND-ANGLE

(43) Date of publication of application: 18.01.2012
(60) Divisional application: 14188559.0
(73) Proprietor: Raytheon Company, Waltham, MA 02451-1449 (US); Todd, Marion N., Ginesville, GA 30506 (US)
(72) Inventor: TODD, Marion, N., Ginesville GA 30506 (US); MACK, John, A., Redondo Beach CA 90277-5222 (US); ROCK, David, F., Torrance CA 90505-4559 (US)
(74) Representative: Beck Greener
(86) International application number: PCT/US2009/036920
(87) International publication number: WO 2010/104512

(56) References cited:
- WO-A1-94/02835
- JP-U- 50 021 586
- US-A- 5 251 004
- US-A1- 2003 034 985
- US-A1- 2008 204 705
- ANONYMOUS: "Porous PTFE material exhibits high reflectivity" , [Online] XP002559267 Retrieved from the Internet: URL:http://www.engineeringtalk.com/news/ft l/ftl122.html> [retrieved on 2003-05-20]
- SNAIL K A ET AL: "INTEGRATING SPHERE DESIGNS WITH ISOTROPIC THROUGHPUT" APPLIED OPTICS, OSA, OPTICAL SOCIETY OF AMERICA, WASHINGTON, DC, vol. 28, no. 10, 15 May 1989 (1989-05-15), pages 1793-1799, XP000032724 ISSN: 0003-6935
- ANONYMOUS, [Online] 27 December 2008, Retrieved from the Internet: <URL:https://web.archive.org/web/2008122711 5444/http://www.pro-lite.uk.com/File/spectr alon_material.php> [retrieved on 2014-04-07]

## Description

This invention relates to a radiance source and, more particularly, to a radiance source that provides a highly uniform light output over a large illumination angle.

### BACKGROUND OF THE INVENTION

Many optical devices must he inspected and calibrated to determine their performance over the entire viewing area. For example, a focal plane array includes thousands of pixels. When illuminated, each pixel produces a respective electrical signal value related to the intensity of incident light. The electrical signal values of the individual pixels are supplied to a processor, which assembles the information into a viewable image or otherwise processes the pixel information.

Ideally, all of the pixels of the focal plane array would respond to light in exactly the same way. In reality, however, the microelectronic fabrication techniques that produce the semiconductor pixel structures have sufficient variability that the pixels do not respond to light in exactly the same way. When the focal plane array is calibrated, the threshold and electrical signal response as a function of intensity for the pixels are recorded and supplied to the processor as a calibration standard. This information, together with the electrical signal produced during service, permit a calculation of the actual incident light intensity as a function of the electrical signal output of each pixel.

To perform the calibration, it is important to illuminate the entire focal plane array with a uniform intensity of light, so that the different responses of the nonuniform pixels may he evaluated and calibrated. Although a number of illumination sources are known and in use, over the wide angle required to illuminate a large focal plane array such illumination sources are uniform only to about 95-98 percent. A higher degree of uniformity is desired in order to achieve a better calibration of the pixels of the focal plane array.

Uniform radiance sources are known from e.g. US 2003/0034985 A1 or US 5,251,004. Moreover PTFE is known as a highly diffusing material, as discussed on engineering talk.com on May 20, 2003.

Similar problems arise in calibrating and evaluating other types of optical devices, due to the unavailability of large-angle, uniform radiance (i.e.. illumination) sources.

There is a need for such a highly uniform radiance source that is uniform over a large angle and thence a large illuminated area. The present invention fulfills this need. and further provides related advantages.

### SUMMARY OF THE INVENTION

The present approach provides a radiance source that, in an embodiment, has a 99.5 percent uniformity, according to ray trace analysis. The illumination is uniform over a wide angle, which can be established according to the specific system design. This radiance source is useful in a wide range of applications, such as analysis and calibration of optical devices.

In accordance with the invention, a radiance source comprises the features of claim 1.

In an example not encompassed by claim 1, the housing comprises a first chamber, a second chamber, and a transfer aperture extending between the first chamber and the second chamber. The first chamber preferably contains the light source and a first spherical segment of the spherical portion of the interior wall. The second chamber preferably contains the calibration structure and a second spherical segment of the spherical portion of the interior wall. The transfer aperture may have a fixed size or a variable size. The exit port and the transfer aperture desirably lie on an axis of symmetry of the interior wall.

In a preferred form of this example, embodiment a radiance source comprises a housing having an interior wall defining an interior volume, wherein at least a spherical portion of the interior wall of the housing is spherical. The housing comprises a first chamber comprising a first spherical segment of the spherical portion of the interior wall, a second chamber comprising a second spherical segment of the spherical portion of the interior wall, an exit port from the second chamber, and a transfer aperture extending between the first chamber and the second chamber. The exit port and the transfer aperture lie on an axis of symmetry of the interior wall. A plurality of light sources may be within the first chamber of the housing and supported from the interior wall of the housing. A calibration structure is within the second chamber and disposed to block and reflect a light ray that would otherwise travel directly from the light sources to the exit port without reflecting from the interior wall. The calibration structure comprises a calibration body having a curved back surface facing the transfer aperture and the light sources in the first chamber, and a curved front surface facing the exit port, and a spider support positioning the calibration body relative to the exit port and to the light source. An optically diffuse lambertian reflecting surface is on at least the spherical portion of the interior wall of the housing, the back surface of the calibration body, and the front surface of the calibration body. Other compatible features described herein may be used with this example.

The transfer aperture preferably comprises an aperture plate having at least two aperture openings of different sizes therethrough. The aperture plate is movable, preferably by rotation, so that any of the aperture openings may be selectively aligned with the axis of symmetry. The transfer aperture also preferably comprises a portion of the interior wall shaped as a frustum of a cone with a smaller end of the frustum of the cone in communication with the first chamber, and a larger end of the frustum of the cone in communication with the second chamber. A cone half angle of the frustum of the cone is from about 12 degrees to about 18 degrees, most preferably about 15 degrees. The interior wall of the transfer aperture may instead be cylindrical.

In an embodiment of the radiance source, substantially the entire interior wall is spherical and there is a single chamber and a calibration body. The exit port and the light source lie on a symmetry diameter of the spherical interior wall. The calibration body is symmetric about the symmetry diameter of the spherical interior wall. The front surface of the calibration body is curved, and is preferably spherically curved about the exit port.

The present approach provides a radiance source that has a uniformity over a wide angle significantly greater than available with any other known type of radiance sources. With the present radiance source, assessments and calibrations of optical devices may be performed to a greater precision than possible with other radiance sources.

### BRIEF DESCRIPTION OF THE DRAWINGS

Figure 1 is an elevational view of a radiance source used in the calibration of a focal plane array;
Figure 2 is a side sectional view of an example of a radiance source;
Figure 3 is an end elevational view of the radiance source of Figure2, with a portion of the housing removed to reveal the internal structure: and
Figure 4 is a schematic side sectional view of an embodiment of the radiance source.

### DETAILED DESCRIPTION OF THE INVENTION

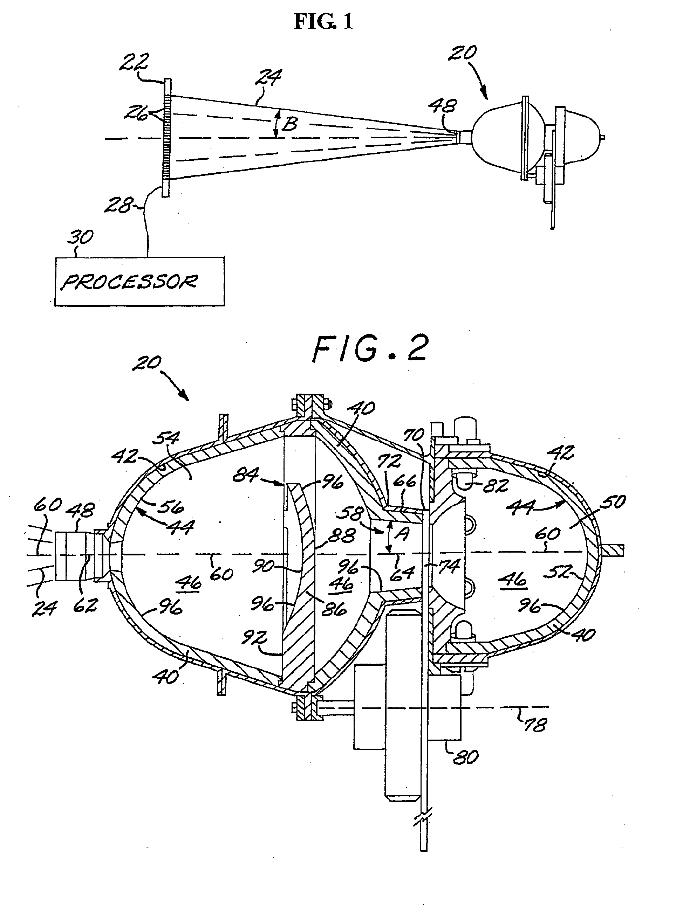

Figure 1 depicts a radiance source 20 used in the calibration of a focal plane array (FPA) 22. The radiance source 20 is positioned to illuminate the FPA 22 with an illumination beam 24. The illumination beam 24 is highly uniform. An electrical output 28 of each of the individual pixels 26 of the FPA 22 is provided to a processor 30. The intensity of the illumination beam 24 is varied over a range of intensities, so that the electrical outputs 28 are obtained and stored in the processor 30 for each pixel 26 over a range of uniform illumination intensities. This information is used to generate a calibration of output as a function of illumination intensity for each pixel 26. The radiance source 20 has many other applications, and the application of Figure 1 is described by way of example.

Figures 2-3 depict a first, and preferred, embodiment of the radiance source 20. The radiance source 20 includes a housing 40 having an interior wall 42. At least a spherical portion 44 of the interior wall 42 of the housing 40 is spherical. That is, in this embodiment some, but not necessarily all of the interior wall 42 is spherical. The interior wall 42 of the housing 40 defines an interior volume 46. There is an exit port 48, from which the illumination beam 24 projects, at one end of the housing 40.

The housing 40 of this first embodiment includes a first chamber 50 defined at least in part by a first spherical segment 52 of the spherical portion 44 of the interior wall 42, and a second chamber 54 defined at least in part by a second spherical segment 56 of the spherical portion 44 of the interior wall 42. The exit port 48 is from the second chamber 54 to the exterior of the housing 40.

A transfer aperture 58 extends between the first chamber 50 and the second chamber 54. In this preferred embodiment, a centerline 62 of the exit port 48 and a centerline 64 of the transfer aperture 58 lie on a rotational axis of symmetry 60 of the interior wall 42. Preferably, the transfer aperture 58 includes an aperture portion 66 of the interior wall 42 shaped as a frustum of a cone with a smaller end 70 of the frustum of' the cone in light communication with the first chamber 50, and a larger end 72 of the frustum of the cone in light communication with the second chamber 54. Alternatively, the aperture portion 66 of the interior wall 66 of the transfer aperture 58 maybe cylindrical.

In a preferred design where a lambertian reflecting material is used as the material of construction of the aperture portion 66 of the interior wall 42 of the transfer aperture 58, a cone half angle A of the frustum of the cone is from about 12 degrees to about 18 degrees, most preferably about 15 degrees. This shape and angle of the aperture portion 66 has been found to optimize the uniformity and throughput of light from the first chamber 50 to the second chamber 54, and thence out the exit port 48. In another design where a specular material is used as the material of construction of the aperture portion 66 of the interior wall 42 of the transfer aperture 58 instead of the lambertian material, the aperture portion 66 of the interior wall 42 of the transfer aperture 58 is cylindrical in shape (which may be considered as a limiting case of a frustum of a cone with the cone half angle of zero). This design results in an increased light throughput through the transfer aperture 58 and out the exit port 48, but with a slightly reduced uniformity of light in the illumination beam 24.

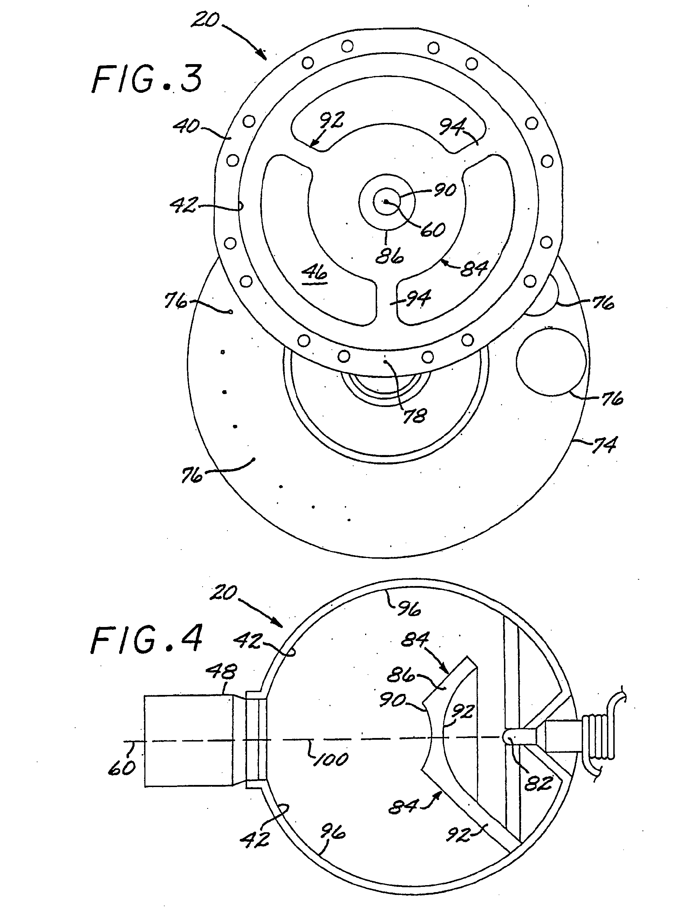

The transfer aperture 58 may be of a fixed size so that a fixed amount of light reaches the second chamber 54 from the first chamber 50. The transfer aperture 58 may instead be, and preferably is, variable in size so that a selectable amount of light reaches the second chamber 54 from the first chamber 50. In the illustrated approach to the variable-size transfer aperture 58, the transfer aperture includes an aperture plate 74 having at least two (and preferably a plurality of) aperture openings 76 (Figure 3) of different sizes therethrough.. In the preferred design, each aperture opening 76 is larger than the next-smaller aperture opening 76 by a factor of the square root of 2 (approximately 1.414). The aperture plate 74 is movable so that any of the aperture openings 76 may be selectively aligned with the axis of symmetry 60 in the transfer aperture 58, so allow different amounts of light to pass from the first chamber 50 to the second chamber 54. In this case, the aperture plate 74 is rotatable about an axis of rotation 78, driven by a motor 80, such as a stepper motor.

A light source 82 is disposed within the interior volume 46 of the housing 40 and is supported from the interior wall 42 of the housing 40. In the embodiment of Figures 2-3, there are a plurality of light sources 82 within the first chamber 50 of the housing 40. In the preferred embodiment, the light sources 82 are eight miniature quartz tungsten halogen lamps positioned symmetrically around the axis of symmetry 60 and at a location within the housing 40 so that their output rays can not propagate through the transfer aperture 58 without reflecting from the interior wall 42 of the first chamber 50 at least once.

A calibration structure 84 is disposed within the interior volume 46 of the housing 40. and specifically within the second chamber 54, to block and reflect a light ray that would otherwise travel directly from the light sources 82 to the exit port 48 without reflecting from the interior wall 42 at least once. In the preferred design, the calibration structure 84 blocks light rays that would otherwise travel directly from the transfer aperture 58 to the exit port 48 without reflecting from the interior wall 42 at least once. The calibration structure 84 includes a calibration body 86 having a curved back surface 88, which acts as a baffle, facing the transfer aperture 58 and thence toward the light sources 82 in the first chamber 50, and a curved front surface 90, which acts as the calibration target, facing the exit port 48. The curved back surface 88 and the curved front surface 90 are preferably spherical surfaces, centered about the intersection of the axis of symmetry 60 with the exit port 48. However, the exact curvature of the curved back surface 88 has little ultimate effect on the performance of the radiance source 20. The curved back surface 88 has a larger radius of curvature than the curved front surface 90, preferably about 0.2 inches, which difference defines the minimum thickness of the calibration body 86. This 0.2-inch thickness is the preferred minimum thickness for the preferred Spectralon^{R} material of construction, to be discussed subsequently. The calibration structure 84 further includes a support preferably a spider support 92, positioning the calibration body 86 relative to the exit port 48, the interior wall 42, and the light sources 82. In the illustrated embodiment, the spider support 92 has three symmetrically spaced (Figure 3) legs 94. Each leg 94 extends from the calibration body 86 to the interior wall 42 of the housing 40.

There is an optically diffuse reflecting surface material 96 on at least the spherical portion 44 (including but not limited to the first spherical segment 52 and the second spherical segment 56) of the interior wall 42 of the housing 40, the back surface 88 of the calibration body 86, and the front surface 90 of the calibration body 86. The calibration body 86 is preferably machined from the reflecting surface material 96, while the walls are covered with a layer of the reflecting surface material 96. The thickness of the layer of the preferred reflecting surface material 96 is preferably about 0.2 inches or more, but most preferably 0.2 inches as this is the minimum thickness for full effectiveness of the preferred reflecting surface material 96. The thickness of the layer of the reflecting surface material 96 is exaggerated in the drawings so that it may be clearly seen.

The optically diffuse, reflecting surface 96 is a substantially lambertian material. A lambertian material is a material whose surface reflections obey Lambert's cosine law. In the preferred embodiment, the optically diffuse reflecting surface 96 is made of Spectralon^{®} material. Spectralon^{®} material is pressed polytetrafluoroethylene, cast into blocks, then machined to shape. Spectralon^{®} material has the highest diffuse reflectance of any known material over the ultraviolet-visible-infrared wavelength region. Spectralon^{®} material is available from Labsphere Co., North Sutton, New Hampshire, and other companies make similar material.

The radiance source 20 of Figures 2-3 functions in the following manner. Light rays are produced by the light sources 82. The light rays reflect at least once, and preferably multiple times, from the first spherical segment 52 of the first chamber 50, eventually passing through the transfer aperture 58 to the second chamber 54. The light rays reflect from the back surface 88 of the calibration body 86 against the interior wall 42 of the second chamber 54, and eventually off the second spherical segment 56 of the second chamber 54. The light rays reflect in the interior of the second chamber 54 and from the front surface 90 of the calibration body 86, preferably multiple times from the different surfaces. Eventually, the light rays pass through the exit port 48 to become the illumination beam 24 of Figure 1.

The combination of the many reflections, the structural symmetry of the interior wall 42, and the use of the lambertian material on the inner walls results in a highly uniform illumination beam 24. A computer trace analysis of 500 x 10⁶ random rays starting from the light sources 82 showed that the illumination beam 24 was uniform to better than 3 decimal places, and in particular to about 99.78 percent uniformity, across an illumination-beam conical half angle B of 23 degrees in the preferred design.

Figure 4 depicts an embodiment of the radiance source 20. The prior description is incorporated here to the extent applicable, and like elements are assigned the same reference numerals. In the embodiment of Figure 4, there is a single chamber, and substantially the entire interior wall 42 is spherical except for attachment points. Substantially the entire interior wall 42, except for attachment points, has the optically diffuse reflecting surface 96. The exit port 48 and the light source 82 lie on a symmetry diameter 100 of the spherical interior wall 42. The calibration body 86 is symmetric about the symmetry diameter 100 of the spherical interior wall 42.

The radiance source 20 of Figure 4 has a uniformity of the illumination beam 24 of about 99.5 percent, less than that of the embodiment of Figures 2-3 but still much better than that of other available radiance sources. It is expected that. because of its simpler construction, the embodiment of Figure 4 is more likely to be built for common laboratory applications that do not require the very highest degree of uniformity found in the embodiment of Figures 2-3.

## Claims

1. A radiance source (20) comprising:
a housing (40) comprising
an interior wall (42) forming a single chamber, wherein substantially all of the interior wall (42) is spherical such as to enclose
an interior volume (46), and
an exit port (48);
a light source (82) disposed within the interior volume (46) of the housing (40) and supported from the interior wall (42) of the housing (40), wherein the exit port (48) and the light source (82) lie on a symmetry diameter (60) of the spherical interior wall (42);
a baffle structure (84) disposed to block and reflect a light ray that would otherwise travel directly from the light source (82) to the exit port (48) without reflecting from the interior wall (42), wherein the baffle structure (84) comprises:
a body (86) having a curved back surface (88) facing the light source (82) and acting as a baffle and a curved front surface (90) facing the exit port (48) and acting as a calibration target, wherein a radius of curvature of the curved back surface (88) is larger than a radius of curvature of the curved front surface (90) so as to define a minimum thickness of the baffle structure (84) of 0.5 cm (0.2 inches) or greater; and
a support (92) positioning the body (86) relative to the exit port (48) and to the light source (82); and
an optically diffuse reflecting surface (96) comprising pressed, cast, and machined polytetrafluoroethylene on at least:
the spherical portion of the interior wall (42) of the housing (40),
the back surface (88) of the body (86), and
the front surface (90) of the body (86).

## Patentansprüche

1. Strahlenquelle (20), die Folgendes umfasst:
ein Gehäuse (40), das Folgendes umfasst:
eine Innenwand (42), die eine einzelne Kammer bildet, wobei im Wesentlichen die Gesamtheit der Innenwand (42) kugelförmig ist, sodass ein Innenvolumen (46) umschlossen wird, und
eine Austrittsöffnung (48);
eine Lichtquelle (82), die innerhalb des Innenvolumens (46) des Gehäuses (40) angebracht ist und von der Innenwand (42) des Gehäuses (40) abgestützt wird, wobei die Austrittsöffnung (48) und die Lichtquelle (82) auf einem symmetrischen Durchmesser (60) der kugelförmigen Innenwand (42) liegen;
eine Umlenkstruktur (84), die angebracht ist, um einen Lichtstrahl zu blockieren und zu reflektieren, der ansonsten direkt von der Lichtquelle (82) zur Austrittsöffnung (48) gelangen würde, ohne von der Innenwand (42) reflektiert zu werden, wobei die Umlenkstruktur (84) Folgendes umfasst:
einen Körper (86), der eine geschwungene Rückseite (88), die der Lichtquelle (82) gegenüberliegt und als ein Umlenkelement fungiert und eine geschwungene Vorderseite (90) aufweist, die der Austrittsöffnung (48) gegenüberliegt und als ein Kalibrierungsziel fungiert, wobei ein Krümmungsradius der geschwungenen Rückseite (88) größer als ein Krümmungsradius der geschwungenen Vorderseite (90) ist, um eine minimale Dicke der Umlenkstruktur (84) von 0,5 cm (0,2 Zoll) oder größer festzulegen; und
eine Stütze (92), die den Körper (86) in Bezug auf die Austrittsöffnung (48) und auf die Lichtquelle (82) positioniert; und
eine optisch diffuse Reflektionsfläche (96), die gepresstes, gegossenes und bearbeitetes Polytetrafluorethylen mindestens auf dem Folgenden umfasst:
dem kugelförmigen Abschnitt der Innenwand (42) des Gehäuses (40),
der Rückseite (88) des Körpers (86), und
der Vorderseite (90) des Körpers (86).

## Revendications

1. Source de rayonnement (20) comprenant:
un logement (40) comprenant;
une paroi interne (42) formant une chambre simple, où sensiblement toute la paroi interne (42) est sphérique de façon à entourer un volume interne (46), et un orifice de sortie (48);
une source de lumière (82) disposée dans le volume interne (46) du logement (40) et supportée par la paroi interne (42) du logement (40), où l'orifice de sortie (48) et la source de lumière (82) reposent sur un diamètre de symétrie (60) de la paroi interne sphérique (42);
une structure à chicanes (84) disposée pour bloquer et refléter un rayon de lumière qui autrement passerait directement de la source de lumière (82) vers l'orifice de sortie (48) sans être reflétée par la paroi interne (42), où la structure à chicanes (84) comprend:
un corps (86) muni d'un verso incurvé (88) faisant face à la source de lumière (82) et faisant office de recto (90) à chicanes et incurvé, faisant face à l'orifice de sortie (48) et faisant office de cible de calibrage:
où un rayon de courbure du verso incurvé (88) est supérieur à un rayon de courbure du recto incurvé (90) pour définir une épaisseur minimale de la structure à chicanes (84) de 0,5 cm (0,2 pouce) ou supérieure; et
un support (92) positionnant le corps (86) par rapport à l'orifice de sortie (48) et à la source de lumière (82); et
une surface réfléchissante optiquement diffuse (96) comprenant du polytétra-fluoréthylène comprimé, coulé et usiné, sur au moins:
la partie sphérique de la paroi interne (42) du logement (40), le verso (88) du corps (86), et
le recto (90) du corps (86).
